# EUROPÄISCHE PATENTSCHRIFT

(11) **EP 3 912 127 B1**
(45) Veröffentlichungstag und Bekanntmachung des Hinweises auf die Patenterteilung: **05.11.2025**
(21) Anmeldenummer: 19828627.0
(22) Anmeldetag: 12.12.2019
(51) Int. Cl.: G06T 7/00, G06T 7/73, F01D 21/00, G01N 21/95, G01N 21/954, G02B 23/24, G06T 15/04, G01N 21/88, G06T 11/00, F03B 11/00

(54) **VERFAHREN UND VORRICHTUNG ZUR INSPEKTION SCHWER ERREICHBARER KOMPONENTEN**
METHOD AND DEVICE FOR INSPECTING HARD-TO-REACH COMPONENTS
PROCÉDÉ ET DISPOSITIF D'INSPECTION DE COMPOSANTS DIFFICILES À ATTEINDRE

(30) Priorität: 14.01.2019 DE 102019100820
(43) Veröffentlichungstag der Anmeldung: 24.11.2021
(73) Patentinhaber: Lufthansa Technik AG, 22335 Hamburg (DE)
(72) Erfinder: PETERS, Jan Oke, 22339 Hamburg (DE); THIES, Michael, 22395 Hamburg (DE); SCHÜPPSTUHL, Thorsten, 21073 Hamburg (DE); NEDDERMEYER, Werner, 6496 Echternach (LU); RASCHE, Sven, 20459 Hamburg (DE); DOMASCHKE, Tomas, 20357 Hamburg (DE); DAMMANN, Maik, 21075 Hamburg (DE); SCHUMANN, Mattes, 21107 Hamburg (DE); TUPPATSCH, Jens-Peter, 22761 Hamburg (DE); BAHR, Sönke, 64285 Darmstadt (DE)
(74) Vertreter: Glawe, Delfs, Moll
(86) Internationale Anmeldenummer: PCT/EP2019/084899
(87) Internationale Veröffentlichungsnummer: WO 2020/148036

(56) Entgegenhaltungen:
- EP-A1- 3 264 341
- US-A1- 2012 154 594
- US-A1- 2013 207 965
- US-A1- 2014 185 912
- STEFFEN MATTHIAS ET AL: "A 3D measuring endoscope for hand-guided operation", MEASUREMENT SCIENCE AND TECHNOLOGY, IOP, BRISTOL, GB, vol. 29, no. 9, August 2018 (2018-08-01), pages 94001, XP020330059, ISSN: 0957-0233, [retrieved on 20180801], DOI: 10.1088/1361-6501/AAD1E1

## Beschreibung

Die Erfindung betrifft ein Verfahren und eine Vorrichtung zur Inspektion schwer erreichbarer Komponenten einer Gasturbine, insbesondere eines Flugzeugtriebwerks.

Im Stand der Technik sind diverse Verfahren zur optischen Inspektion von Gasturbinen, insbesondere von Flugzeugtriebwerken wie Strahltriebwerken, bekannt, bei denen ein Boroskop oder Endoskop durch eine seitliche Öffnung in eine vollständig montierte Gasturbine eingeführt werden kann, um damit dann das Innere der Gasturbine optisch inspizieren zu können.

Beispielsweise wird zur Inspektion der Brennkammer einer Gasturbine ein flexibles Endoskop eingeführt und solange bei kontinuierlicher Bilderfassung manuell bewegt, bis die Brennkammer vollständig aufgenommen ist, also für jeden Bereich der Brennkammer wenigstens ein Bild erfasst wurde. So wird häufig ein flexibles Endoskop entlang des kompletten Innenumfangs einer Brennkammer geführt, bevor es anschließend langsam herausgezogen wird. Dadurch soll sichergestellt werden, dass die Brennkammer über ihren kompletten Umfang befundet wird.

Die so erzeugten Videoaufnahmen werden manuell analysiert, um den Bauzustand der Brennkammer zu dokumentieren. Bei signifikanten Beschädigungen kann eine manuelle statische 3D-Erfassung erfolgen, um die Beschädigung der Brennkammer noch genauer zu analysieren. Diese 3D-Erfassung ist jedoch sehr aufwendig und zeitintensiv, sodass sie nur in Ausnahmefällen durchgeführt wird.

Die gemäß dem Stand der Technik erzeugten Videoaufnahmen sind aufgrund der manuellen Führung des Endoskops weiterhin praktisch nicht reproduzierbar. Somit lassen sich weder zwei Videoaufnahmen derselben Gasturbine zu unterschiedlichen Zeitpunkten, noch Videoaufnahmen von zwei Gasturbinen desselben Typs unmittelbar miteinander vergleichen.

Das Dokument US 2014/0185912 A1 beschreibt ein Verfahren zur Boroskopinspektion eines Flugzeugtriebwerks, bei dem boroskopisch erfasste 2D-Bilder mit Bildern aus einer Datenbank abgeglichen werden, wobei die Datenbankbilder mit 3D-Daten des zu untersuchenden Gegenstands verknüpft sind.

In Dokument US 2012/0154594 A1 ist eine Inspektion beschrieben, bei der die Position der Kamera über die gesteuerte Manipulation eines Aktuators nach initialer Kalibrierung ermittelt und ein Vergleich der von der Kamera erfassten 2D-Bildern mit jeweils passenden Renderings eines 3D-Modells des untersuchten Gegenstandes ermöglicht wird.

Das Dokument US 2013/0207965 A1 beschreibt ein System zur manuellen oder halbautomatischen Anpassung eines 3D-Modells einer Triebwerksschaufel auf ein boroskopisch aufgenommenes Bild der Triebwerksschaufel.

Aufgabe der vorliegenden Erfindung ist es, ein Verfahren und eine Vorrichtung zur Inspektion schwer erreichbarer Komponenten einer Gasturbine zu schaffen, bei der die aus dem Stand der Technik bekannten Nachteile nicht mehr oder zumindest nur noch in vermindertem Umfang auftreten.

Gelöst wird diese Aufgabe durch ein Verfahren sowie eine Vorrichtung gemäß den unabhängigen Ansprüchen 1 und 7. Vorteilhafte Weiterbildungen sind Gegenstand der abhängigen Ansprüche. Demnach betrifft die Erfindung ein Verfahren zur Inspektion einer oder mehrerer schwer erreichbarer Komponenten einer Gasturbine mit einem steuerbaren flexiblen Endoskop mit wenigstens einer zur Erfassung von visuellen Bildinformationen und dazugehörigen 3D-Daten ausgebildeten Bilderfassungseinheit am freien Ende des Endoskops und einer automatisch steuerbaren Kinematik, über welche eine Grobpose der Bilderfassungseinheit ermittelbar ist, mit den Schritten:
a) Einführen des Endoskops durch eine Inspektionsöffnung;
b) Erfassen von visuellen Bildinformationen und dazugehörigen 3D-Daten durch die wenigstens eine Bilderfassungseinheit, wobei die wenigstens eine Bilderfassungseinheit entlang einer im 3D-Modell enthaltenen Führungslinie automatisch geführt wird;
c) Abgleichen der erfassten 3D-Daten mit einem 3D-Modell der zu untersuchenden Komponente(n) zur Ermittlung der relativen Pose der Bilderfassungseinheit gegenüber der oder den Komponente(n) unter Verwendung der Grobpose als Ausgangspunkt; und
d) Texturieren des 3D-Modells mit den durch die Bilderfassungseinheit erfassten visuellen Bildinformationen entsprechend der ermittelten relativen Pose der Bilderfassungseinheit.

Weiterhin betrifft die Erfindung eine Vorrichtung zur Inspektion einer oder mehrerer schwer erreichbarer Komponenten einer Gasturbine umfassend ein flexibles Endoskop mit wenigstens einer zur Erfassung von visuellen Bildinformationen und dazugehörigen 3D-Daten ausgebildeten Bilderfassungseinheit am freien Ende des Endoskops, einer automatisch steuerbaren Kinematik, über welche eine Grobpose der Bilderfassungseinheit ermittelbar ist und einer mit der Bilderfassungseinheit verbundenen Rechnereinheit mit einem Speicher zur Aufnahme eines 3D-Modells der zu untersuchenden Komponente(n), wobei die Rechnereinheit zur Durchführung des erfindungsgemäßen Verfahrens ausgebildet ist.

Bei dem erfindungsgemäßen Verfahren werden nach Einführung des Endoskops durch eine dafür vorgesehene Inspektionsöffnung - anders als im Stand der Technik - durch die Bilderfassungseinheit nicht nur visuelle Bildinformationen erfasst, sondern auch dazugehörige 3D-Daten. Bei den 3D-Daten handelt es sich um relative Positionsdaten, die den Abstand der einzelnen Punkte der visuellen Bildinformation zur Bilderfassungseinheit widerspiegeln, sodass sich beim Zusammenfügen der 3D-Daten mit den visuellen Bildinformationen letztendlich ein dreidimensionales Bild ergibt.

Die erfassten 3D-Daten werden anschließend mit einem 3D-Modell der zu untersuchenden Komponente(n) abgeglichen, um dadurch die relative Pose der Bilderfassungseinheit gegenüber der von ihr erfassten Komponente zu ermitteln. Bei dem 3D-Modell kann es sich bspw. um das CAD-Modell handeln, welches dem Bau der zu untersuchenden Komponente(n) zugrunde lag. Die "relative Pose" umfasst dabei wenigstens die relative Position und Orientierung der Bilderfassungseinheit gegenüber den Komponente(n). Verfahren, um aus 3D-Daten, die in der Regel als Punktwolken bzw. Höhenfeldinformationen vorliegen, mit 3D-Modellen, wie bspw. Drahtgittermodellen, abzugleichen, um die gewünschte Pose zu ermitteln, sind im Stand der Technik bekannt.

Das 3D-Modell kann dann in Kenntnis der relativen Pose der Bilderfassungseinheit durch die visuellen Bildinformationen texturiert werden. Dabei werden die visuellen Bildinformationen virtuell ausgehend von der ermittelten Pose der Bilderfassungseinheit auf das 3D-Modell projiziert und in das 3D-Modell übernommen.

Es ist bevorzugt, wenn die Schritte der Erfassung von visuellen Bildinformationen und dazugehörigen 3D-Daten, der Ermittlung der relativen Pose der Bilderfassungseinheit gegenüber der oder den Komponente(n) durch Abgleich der erfassten 3D-Daten mit einem 3D-Modell und die Texturieren des 3D-Modells mit den durch die Bilderfassungseinheit erfassten visuellen Bildinformationen wiederholt werden, nachdem die Pose der Bilderfassungseinheit verändert wird. Eine Veränderung der Pose der Bilderfassungseinheit bedeutet auch eine Veränderung des von ihr aufgenommenen Bildausschnitts. Durch entsprechende Anzahl an Wiederholungen der genannten Schritte kann bei geeigneter Veränderung der Pose der Bilderfassungseinheit so nach und nach das gesamte 3D-Modell vollständig texturiert werden. Kommt es zu Überschneidungen von erfassten visuellen Bildinformationen mit bereits vorhandener Textur des 3D-Modells können die visuellen Bildinformationen durch bekannte Stitching-Verfahren, wie sie bspw. aus der Panoramafotografie bekannt sind, miteinander verknüpft werden.

Insbesondere bei der endoskopischen Inspektion von im Grundsatz rotationssymmetrisch ausgestalteten Gasturbinen ist nicht ausgeschlossen, dass sich aus den erfassten 3D-Daten keine eindeutige Pose ermitteln lässt, sondern für die 3D-Daten grundsätzliche mehrere Posen der Bilderfassungseinheit im 3-D Modell in Betracht kommen. Es ist daher bevorzugt, dass - wenn nach einer Veränderung der Pose der Bilderfassungseinheit neue visuelle Bildinformationen und 3D-Daten erfasst und wie beschrieben verarbeitet werden - die zu den zuvor erfassten visuellen Bildinformationen zugehörige Pose als Ausgangspunkt für den Abgleich anschließend zusammen mit weiteren visuellen Bildinformationen erfasster 3D-Daten mit dem 3D-Modell der zu untersuchenden Komponente(n) verwendet wird. In anderen Worten soll zunächst in der Umgebung der zuvor ermittelten Pose nach möglicherweise in Frage kommenden relativen Posen der Bilderfassungseinheit aufgrund der erfassten 3D-Daten gesucht werden, sodass bei ggf. mehreren infrage kommenden Posen die der vorherigen Pose am nächsten kommende Pose als zutreffend angesehen wird. Insbesondere wenn die visuellen Bildinformationen und 3D-Daten bei kleinen Veränderungen der Pose der Bilderfassungseinheit oder aber in regelmäßige kurzen Abständen, wenn nicht gar kontinuierlich, erfasst werden, lässt sich die Pose der Bilderfassungseinheit in der Regel zuverlässig bestimmen. Bei Bedarf kann bereits während des Einführens des Endoskops durch die Inspektionsöffnung mit der Erfassung durch die Bilderfassungseinheit begonnen werden, sodass die beschriebene Fortschreibung der ermittelten Pose der Bilderfassungseinheit an einem definierten Punkt beginnt, der bspw. auch in dem 3D-Modell entsprechend hinterlegt sein kann.

Das flexible Endoskop weist eine automatisch steuerbare Kinematik auf, um die am freien Ende angeordnete Bilderfassungseinheit durch die Inspektionsöffnung hindurch zu bewegen. Die Kinematik kann bspw. entsprechend einem flexiblen Manipulatorarm als Führung für das Endoskop ausgestaltet sein, der eine sehr hohe Zahl an Freiheitsgraden aufweist. Die Kinematik kann aber auch in einer kettenartigen Führung des Endoskops bestehen, wobei die einzelnen Kettenglieder relativ zueinander bewegt (insbesondere verschwenkt) werden können. Eine entsprechende Führung kann bspw. auch als Schwanenhals aus gewendeltem Metallschlauch oder in ähnlicher Weise verformbarer Strukturen ausgeführt werden. Es ist besonders bevorzugt, wenn das Endoskop an seinem freien Ende eine Abwinkelungseinheit aufweist, mit welcher der mit der Bilderfassungseinheit ausgestattete Bereich gegenüber der Längsachse des Endoskops abgewinkelt werden kann. Die letztendliche Bewegung der Kinematik kann auf bekannte Weise durch kleine, unmittelbar an der Führung angeordnete Aktuatorelemente oder über Bowdenzüge erreicht werden. Das Endoskop kann mit Kunststoff überzogen sein, um Beschädigungen am Flugzeugtriebwerk bei unbeabsichtigten Kontakt zu vermeiden.

Bei einer entsprechenden automatisch steuerbaren Kinematik kann die Pose der Bilderfassungseinheit aufgrund des Zustands der Kinematik ausgehend von der Inspektionsöffnung bestimmt werden. Die Pose lässt sich dabei in der Regel nur grob, d. h. für die unmittelbare Verwendung als relative Pose der Bilderfassungseinheit zum Zwecke der Texturierung zu ungenau, ermitteln. Allerdings kann diese Grobpose als Ausgangspunkt für den Abgleich der erfassten 3D-Daten mit dem 3D-Modell der zu untersuchenden Komponente(n) verwendet werden. Sind aufgrund der 3D-Daten grundsätzlich mehrere Posen der Bilderfassungseinheit in dem 3D-Modell denkbar, kann ausgehend von der erfassten Grobpose der Bilderfassungseinheit die nächstliegende mögliche Pose gemäß 3D-Modell gesucht werden.

Um die Genauigkeit der zu ermittelten relativen Pose, aber ggf. auch die Eindeutigkeit der ermittelten relativen Pose zu erhöhen, ist es bevorzugt, wenn das Endoskop über wenigstens zwei Bilderfassungseinheiten verfügt, die visuellen Bildinformationen und 3D-Daten in unterschiedlichen Blickwinkel erfassen, wobei vorzugsweise gleichzeitig erfasste Bildinformationen und 3D-Daten in unterschiedlichen Blickwinkel gemeinsam zum Abgleich der erfassten 3D-Daten mit dem 3D-Modell der zu untersuchenden Komponente(n) genutzt werden. "Blickwinkel" bezeichnet dabei den Winkel des Aufnahmekegels der Bilderfassungseinheit gegenüber einer Referenzachse oder -ebene, bspw. der Längsachse des Endoskops im Bereich der Bilderfassungseinheit oder einer diese Längsachse umfassende Ebene. Die Blickwinkel sind dabei so zu wählen, dass keine zwei Bilderfassungseinheiten einen vollständig identischen Bereich erfassen; Überlappungen, auch weitgehende Überlappungen von Erfassungsbereichen zweier Bilderfassungseinheiten sind aber möglich. Indem mehr als eine Bilderfassungseinheit vorgesehen ist, kann bei der Erfassung von visuellen Bildinformationen und dazugehörigen 3D-Daten aufgrund der vorgesehenen unterschiedlichen Blickwinkel der einzelnen Bilderfassungseinheiten ein größerer Erfassungsbereich abgedeckt werden. In der Folge liegen mehr 3D-Daten vor, die bei dem Abgleich mit dem 3D-Modell herangezogen werden können. Darüber hinaus können mittels der zusätzlichen visuellen Bildinformationen der weiteren Bilderfassungssensoren in einem Durchlauf größere Flächen des 3D-Modells texturiert werden, sodass ggf. die für die vollständige Erfassung von Komponente(n) oder gewünschten Bereichen davon erforderliche Anzahl an Posen der Bilderfassungseinheit, von denen visuelle Bildinformationen und 3D-Daten erfasst werden müssen, sowie die damit verbundene Zeit reduziert werden kann. Es kann vorgesehen sein, eine Mehrzahl an Bilderfassungssensoren vorzusehen und diese so anzuordnen, dass visuelle Bildinformationen und 3D-Daten über den gesamten Umfang um die Achse des Endoskops im Bereich der Bilderfassungseinheiten erfasst werden. In anderen Worten sollen ausreichend Bilderfassungseinheiten vorgesehen sein, um 360°-Aufnahmen zu ermöglichen.

Nachdem die 3D-Daten verwendet wurden, um die relative Pose der Bilderfassungseinheit im 3D-Modell zu ermitteln, werden die 3D-Daten vorzugsweise zum erneuten Abgleich mit dem 3D-Modell zur Feststellung von Abweichungen herangezogen. Bei der Ermittlung der Pose der Bilderfassungseinheit anhand der 3D-Daten treten bereits aufgrund von Messungenauigkeiten grundsätzlich Abweichungen von dem 3D-Modell auf, die gewichtet werden, um dennoch die Pose der Bilderfassungseinheit genau bestimmen zu können. Auch Deformationen oder vergleichbare Beschädigungen der zu untersuchenden Komponenten spiegeln sich in den 3D-Daten wieder und bedeuten eine Abweichung von dem 3D-Modell, die bei ausreichend 3D-Daten unbeschädigter Bereiche durch geeignete Gewichtung einer genauen Bestimmung der Pose der Bilderfassungseinheit jedoch nicht entgegenstehen. Die bei dem "zweiten" Abgleich der 3D-Daten mit dem 3D-Modell ermittelten Abweichungen können Auskunft über mögliche Beschädigungen der inspizierten Komponente(n) geben. Die Abweichungen können vorzugsweise als Veränderung der Texturierung (bspw. Einfärbung) und/oder als Anpassung des 3D-Modells entsprechend der erfassten 3D-Daten hinterlegt werden. Dadurch werden die festgestellten Abweichungen leicht am texturierten 3D-Modell erkennbar.

Die wenigstens eine Bilderfassungseinheit des Endoskops wird entlang einer vorgegebenen Führungslinie automatisch geführt. Die Führungslinie kann bspw. im 3D-Modell enthalten und/oder anhand des 3D-Modells entwickelt sein. Ist eine automatische Führung des Endoskops vorgesehen, muss das Endoskop oder eine damit verbundene Halterung lediglich an der Inspektionsöffnung angesetzt und in diesem Bereich befestigt werden; die letztendliche Bewegung des Endoskops im Innern erfolgt automatisch, bspw. computergesteuert. Dabei wird die Bilderfassungseinheit entlang einer vorgegebenen Führungslinie bewegt. Durch eine solche automatische Führung des

Endoskops kann im Vergleich zu einer manuellen Betätigung des Endoskops sichergestellt werden, dass sämtliche gewünschten Bereiche der zu untersuchenden Komponente(n) wenigstens einmal von der einer Bilderfassungseinheit erfasst werden, ohne dass es zu unnötigen Doppelerfassungen kommt.

Die Bilderfassungseinheit kann einen Bildsensor zur Erfassung von visuellen Bildinformationen und einen Entfernungssensor zur Erfassung der 3D-Daten umfassen. Entsprechende Sensoren sind im Stand der Technik bekannt. Es ist auch möglich, die beiden Sensoren zu vereinen, bspw. in einem Fotomischdetektor.

Bevorzugt ist es, wenn zur Erfassung von visuellen Bildinformationen und 3D-Daten die Bilderfassungseinheit in einem Abstand angeordnete Bilderfassungssensoren mit im Wesentlichen parallel oder in einem kleinen Winkel zueinander ausgerichteten Aufnahmeachsen aufweist, aus deren erfassten Bildinformationen sich durch Triangulation 3D-Daten ermitteln lassen. Verschiedene Berechnungsmethoden zur Gewinnung von 3D-Daten aus zwei entsprechend erfassten Bildern sind unter dem Begriff "Computerstereovision" bekannt.

Die Bilderfassungseinrichtung kann zur Erfassung von für die Verarbeitung zu 3D-Daten geeigneten visuellen Bildinformationen Graustufen-CMOS-Sensoren mit Global Shutter aufweisen, die für die benötigte Auflösung ausreichend kompakt für die Verwendung in einem Endoskop sind. Für Farbinformationen kann ein zusätzlicher Farb-CMOS-Sensor oder Farb-CCD-Sensor vorgesehen sein, für den ein Rolling Shutter ausreichend ist, sodass auch dieser Sensor ausreichend klein ausfallen kann.

Das durch das erfindungsgemäße Verfahren erstellte texturierte 3D-Modell der zu untersuchenden Komponenten kann an einer Anzeigeeinrichtung beliebig visualisiert und begutachtet werden. Das erfindungsgemäß erzeugte 3D-Modell ist darüber hinaus von der tatsächlichen Durchführung der endoskopischen Inspektion entkoppelt, sodass sich zwei zu unterschiedlichen Zeiten erzeugte 3D-Modelle derselben Komponente(n) unmittelbar und ggf. auch automatisiert miteinander vergleichen lassen. Gleiches gilt für 3D-Modelle unterschiedlicher Komponenten desselben Typs. Die erzeugten 3D-Modelle können beliebig gespeichert, ausgewertet und weiterverarbeitet werden.

Zur Erläuterung der erfindungsgemäßen Vorrichtung wird auf die vorstehenden Ausführungen verwiesen.

Die Erfindung wird nun anhand einer bevorzugten Ausführungsform unter Bezugnahme auf die beigefügten Zeichnungen beispielhaft beschrieben. Es zeigen:
- Figur 1:: eine schematische Schnittansicht eines Flugzeugtriebwerks mit darin eingeführter erfindungsgemäßer Vorrichtung;
- Figur 2:: ein vergrößerter Ausschnitt der Figur 1; und
- Figur 3:: eine schematische Darstellung der Funktionsweise der Vorrichtung aus Figuren 1 und 2.

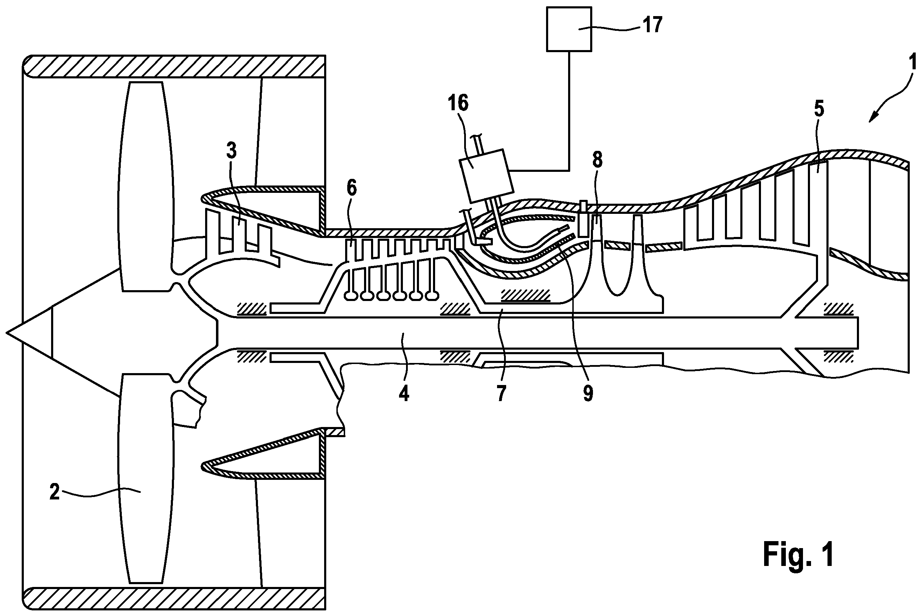

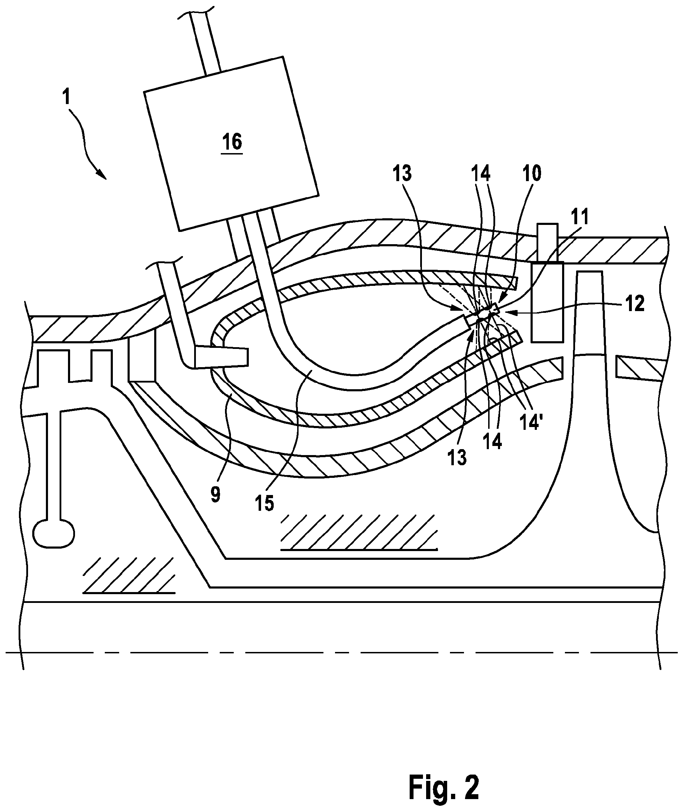

In Figuren 1 und 2 ist schematisch ein Schnitt durch ein Zweiwellen-Triebwerk 1 gezeigt, bei dem der Fan 2 sowie der Niederdruckkompressor 3 über eine erste Welle 4 mit der Niederdruckturbine 5 drehverbunden ist, während der Hochdruckkompressor 6 über eine zweite Welle 7 mit der Hochdruckturbine 8 drehverbunden ist. Zwischen Hochdruckkompressor 6 und Hochdruckturbine 8 ist die Brennkammer 9 angeordnet.

Zur Inspektion der Brennkammer 9 ist eine erfindungsgemäße Vorrichtung 10 vorgesehen.

Die Vorrichtung 10 umfasst ein flexibles Endoskop 11, an dessen freien Ende 12 zwei Bilderfassungseinheiten 13 vorgesehen sind. Jede der Bilderfassungseinheiten 13 umfasst jeweils zwei Bilderfassungssensoren 14. Bei den Bilderfassungssensoren 14 handelt es sich um CMOS-Sensoren mit Global Shutter. Die Aufnahmeachsen 14' der beiden Bilderfassungssensoren 14 jeweils einer Bilderfassungseinheit 13 verlaufen parallel zueinander. Dadurch können aus zeitgleich aufgenommenen Bildinformationen der Bilderfassungssensoren 14 derselben Bilderfassungseinheit 13 durch bekannte Computerstereovisionsverfahren 3D-Daten abgeleitet werden. Die beiden Bilderfassungseinheiten 13 sind auf gegenüberliegenden Seiten des Endoskops 11 angeordnet, sodass die Bilderfassungseinheiten 13 jeweils andere Blickwinkel haben und andere Aufnahmebereiche abdecken.

Das flexible Endoskop 11 weist eine automatisch steuerbare Kinematik in Form einer steuerbaren Führung 15 auf, in der das flexible Endoskop 11 geführt ist. Die Führung 15 ist dabei als flexibler Manipulatorarm ausgestaltet, der eine sehr hohe Zahl an Freiheitsgraden besitzt. Die Antriebe und Steuerung der Führung 15 sind in der Halterungs- und Antriebseinheit 16 angeordnet. Mit der Halterungs- und Antriebseinheit 16 ist die Vorrichtung 10 an der Außenseite des Triebwerks 1 im Bereich einer Inspektionsöffnung befestigt. Die in der Einheit 16 integrierten Antriebe sind dazu ausgebildet, das Endoskop 11 bzw. dessen Führung 15 durch die Inspektionsöffnung weiter einzuführen oder herauszuziehen. Außerdem gestatten die Antriebe die Steuerung der Führung 15 in sämtlichen zur Verfügung stehenden Freiheitsgraden, sowie die Rotation des Endoskops 11 gegenüber der Führung 15. Durch die Halterungs- und Antriebseinheit 16 lässt sich das freie Ende des Endoskops 11 nahezu beliebig in der Brennkammer 9 positionieren und orientieren, wobei sich aus der Steuerung der Führung 15 bzw. des Endoskops 11 die ungefähre Pose der Bilderfassungseinheiten 13 am freien Ende 12 des Endoskops 11 gegenüber der Inspektionsöffnung ergibt. Ist die Pose der Inspektionsöffnung gegenüber der Brennkammer 9 eindeutig, kann daraus die grobe Pose der Bilderfassungseinheiten 13 gegenüber der Brennkammer 9 ermittelt werden.

Die Bilderfassungseinheiten 13 des Endoskops 11 sowie Halterungs- und Antriebseinheit 16 sind mit dem Rechner 17 datenverbunden. Der Rechner 17 ist dazu ausgebildet, das Endoskop 11 insbesondere über die Halterungs- und Antriebseinheit 16 zu steuern und somit insbesondere die Bilderfassungseinheiten 13 zu bewegen. Auch können die von den Bilderfassungseinheiten 13 erfassten Daten ausgewertet werden. Dabei können die Bilderfassungseinheiten 13 lediglich die von den jeweiligen Bilderfassungssensoren 14 aufgenommenen visuellen Bildinformationen an den Rechner 17 liefern, der daraus dann mithilfe von Computerstereovisionsverfahren 3D-Daten zu ermitteln. Es ist aber auch möglich, dass die Bilderfassungseinheiten 13 über geeignete Berechnungsmodule verfügen, mit denen die 3D-Daten ermittelt werden, sodass nur noch die visuellen Bildinformationen eines der beiden Bilderfassungssensoren 14 zusammen mit den in der Bilderfassungseinheit 13 selbst ermittelten 3D-Daten an den Rechner 17 übertragen werden müssen.

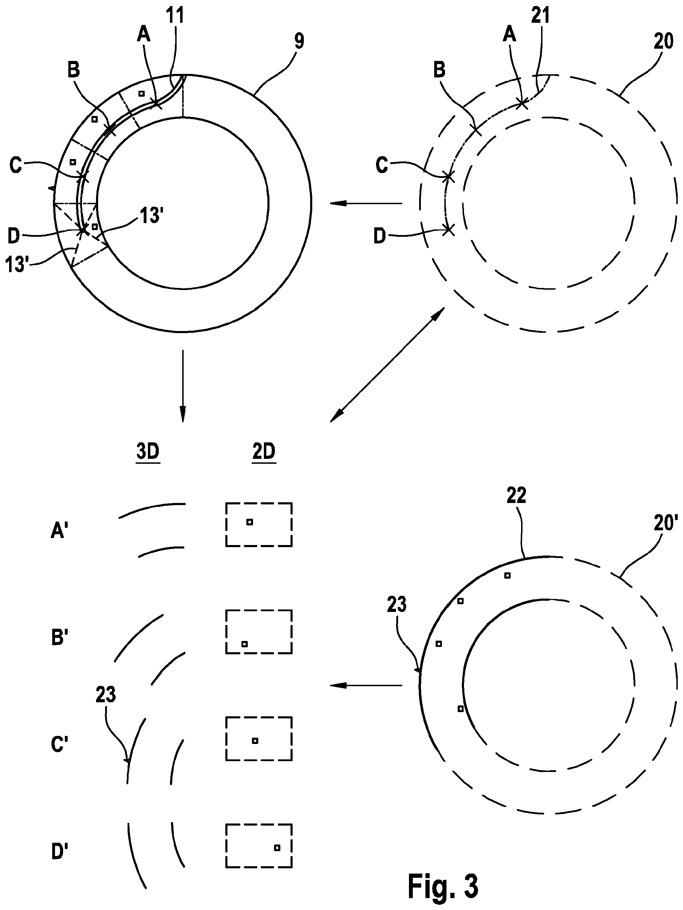

Die prinzipielle Funktionsweise der Vorrichtung 10 aus Figuren 1 und 2 wird nun anhand Figur 3 näher erläutert. Dabei wird aus Gründen der Übersichtlichkeit bewusst auf eine vereinfachte Darstellung zurückgegriffen.

In dem Rechner 14 ist ein 3D-Modell 20 der zu untersuchenden Komponente - nämliche der Brennkammer 9 - vorgesehen, von dem aus Darstellungsgründen lediglich ein Schnitt dargestellt ist. Das 3D-Modell 20 weist im Ausgangszustand keine Textur auf, weshalb es gestrichelt dargestellt ist.

Teil des 3D-Modells 20 ist eine Führungslinie 21, entlang derer vier Posen A, B, C, D definiert sind, an denen jeweils visuelle Bilddaten und 3D-Daten erfasst werden sollen.

Die Führungslinie 21 wird von dem Rechner 14 genutzt, um mithilfe der Halterungs- und Antriebseinheit 16 daran entlang das Endoskop 11 zu führen (vgl. Figur 3, links oben). Bei Erreichen der Posen A, B, C, D werden von den Bilderfassungseinheiten 13 - von denen in Figur 3 lediglich die Aufnahmekegel 13' angedeutet sind - jeweils visuelle 2D-Bildinformationen sowie 3D-Daten erfasst. Die 3D-Daten werden dabei über Computerstereovisionsverfahren aus den visuellen 2D-Bildinformationen der beiden Bilderfassungssensoren 14 einer Bilderfassungseinheit 13 (vgl. Figur 2) gewonnen und spiegeln somit den Abstand der einzelnen Punkte der visuellen Bildinformationen von der Bilderfassungseinheit 13 wieder.

Die Daten beider Bilderfassungseinheiten 13 werden zusammen mit der jeweils vorgegebenen Pose A, B, C, D, von der aus die visuellen Bildinformationen und die daraus abgeleiteten 3D-Informationen erfasst wurden, vom Rechner 14 weiterverarbeitet (vgl. Figur 3, links unten). Da die Posen A, B, C, D von dem Endoskop 11 bzw. dessen Führung 15 in der Regel nicht mit ausreichender Sicherheit genau erreicht werden können, können die Posen dabei nicht als tatsächliche, sondern nur als Grobposen A', B', C', D' angesehen werden.

Ausgehend von den Grobposen A', B', C', D' werden die erfassten 3D-Daten beider Bilderfassungseinrichtungen 13 mit dem Modell 20 abgeglichen und um die tatsächliche Pose der beiden Bilderfassungseinrichtungen 13 und somit des freien Endes 12 des Endoskops 11 zu ermitteln. Entsprechende Verfahren zum Abgleich der erfassten 3D-Daten mit dem 3D-Modell 20 sind im Stand der Technik bekannt. Indem von der jeweiligen Grobpose A', B', C', D' ausgegangen wird, kann sichergestellt werden, dass nach dem Abgleich von 3D-Daten mit dem 3D-Modell 20 aus mehreren möglichen Posen der Bilderfassungseinrichtungen 13 die tatsächlich zutreffende ausgewählt wird.

Die so ermittelte exakte Pose der Bilderfassungseinheiten 13 wird anschließend dazu genutzt, die visuellen 2D-Bilddaten von der jeweils ermittelten tatsächlichen Pose der Bilderfassungseinheiten 13 virtuell auf das 3D-Modell 20 zu projizierten, womit ein texturiertes 3D-Modell 20' erzeugt wird. Sollte es dabei zu Überschneidungen zwischen bereit bestehenden Texturen 22 und projizierten 2D-Bilddaten kommen, können aus dem Stand der Technik bekannte Stiching-Verfahren angewendet werden, um einen nahtlosen Übergang in der Textur zu erreichen.

Darüber hinaus kann das 3D-Modell 20' aufgrund lokaler Abweichungen 23 davon in den erfassten 3D-Daten, die häufig auf eine Beschädigung hinweisen, angepasst werden, sodass die Abweichung 23 auch im texturierten 3D-Modell 20' zu finden sind. Die Textur 20 kann im Bereich entsprechender Abweichungen 23 darüber hinaus eingefärbt werden, um die Abweichungen 23 so im 3D-Modell 20' leichter erkennbar zu machen.

## Patentansprüche

1. Verfahren zur Inspektion einer oder mehrerer schwer erreichbarer Komponenten (9) einer Gasturbine (1) mit einem flexiblen Endoskop (11) mit wenigstens einer zur Erfassung von visuellen Bildinformationen und dazugehörigen 3D-Daten ausgebildeten Bilderfassungseinheit (13) am freien Ende (12) des Endoskops (11) und einer automatisch steuerbaren Kinematik, über welche eine Grobpose der Bilderfassungseinheit (13) ermittelbar ist, mit den Schritten:
a) Einführen des Endoskops (11) durch eine Inspektionsöffnung;
b) Erfassen von visuellen Bildinformationen und dazugehörigen 3D-Daten durch die wenigstens eine Bilderfassungseinheit (13), wobei die wenigstens eine Bilderfassungseinheit (13) entlang einer im 3D-Modell (20) enthaltenen Führungslinie (21) automatisch geführt wird;
c) rechnergestütztes Abgleichen der erfassten 3D-Daten mit einem 3D-Modell (20) der zu untersuchenden Komponente(n) (9) zur Ermittlung der relativen Pose (A, B, C, D) der Bilderfassungseinheit (13) gegenüber der oder den Komponente(n) (9) unter Verwendung der Grobpose als Ausgangspunkt; und
d) rechnergestütztes Texturieren des 3D-Modells (20) mit den durch die Bilderfassungseinheit (13) erfassten visuellen Bildinformationen entsprechend der ermittelten relativen Pose der Bilderfassungseinheit (13).

2. Verfahren nach Anspruch 1,
**dadurch gekennzeichnet, dass**
die Schritte b) bis d) nach einer Veränderung der Pose (A, B, C, D) der Bilderfassungseinheit (13) des Endoskops (11) wiederholt wird.

3. Verfahren nach Anspruch 2,
**dadurch gekennzeichnet, dass**
die zu den zuvor erfassten visuellen Bildinformationen zugehörige Pose (A, B, C, D) als Ausgangspunkt für den Abgleich anschließend zusammen mit weiteren visuellen Bildinformationen erfasster 3D-Daten mit dem 3D-Modell (20) der zu untersuchenden Komponente(n) (9) verwendet wird.

4. Verfahren nach Anspruch 1,
**dadurch gekennzeichnet, dass**
das Endoskop (11) über wenigstens zwei Bilderfassungseinheiten (13) verfügt, die visuelle Bildinformationen und 3D-Daten in unterschiedlichen Blickwinkeln erfassen, wobei vorzugsweise gleichzeitig erfasste Bildinformationen und 3D-Daten in unterschiedlichen Blickwinkel gemeinsam zum Abgleich der erfassten 3D-Daten mit dem 3D-Modell (20) der zu untersuchenden Komponente(n) (9) genutzt werden.

5. Verfahren nach Anspruch 1,
**dadurch gekennzeichnet, dass**
nach Ermittlung der Pose (A, B, C, D) der Bilderfassungseinheit (13) gegenüber der oder den Komponente(n) (9) die erfassten 3D-Daten mit dem 3D-Modell (20) zur Feststellung von Abweichungen (21) abgeglichen werden, wobei die Abweichungen (21) vorzugsweise als Veränderung der Texturierung (20) und/oder als Anpassung des 3D-Modells (20) entsprechend der erfassten 3D-Daten hinterlegt werden.

6. Verfahren nach einem der vorhergehenden Ansprüche,
**dadurch gekennzeichnet, dass**
die verwendete Bilderfassungseinheit (13) in einem Abstand angeordnete Bilderfassungssensoren (14) mit im Wesentlichen parallel zueinander ausgerichteten Aufnahmeachsen aufweist, aus deren erfassten Bildinformationen sich durch Triangulation 3D-Daten ermitteln lassen.

7. Vorrichtung (10) zur Inspektion einer oder mehrerer schwer erreichbarer Komponenten (9) einer Gasturbine (1) umfassend ein flexibles Endoskop (11) mit wenigstens einer zur Erfassung von visuellen Bildinformationen und dazugehörigen 3D-Daten ausgebildeten Bilderfassungseinheit (13) am freien Ende (12) des Endoskops (11), einer automatisch steuerbaren Kinematik, über welche eine Grobpose der Bilderfassungseinheit (13) ermittelbar ist und einer mit der Bilderfassungseinheit (13) verbundenen Rechnereinheit (17) mit einem Speicher zur Aufnahme eines 3D-Modells (20) der zu untersuchenden Komponente(n) (9), wobei die Rechnereinheit (17) zur Durchführung des Verfahrens gemäß einem der Ansprüche 1 bis 6 ausgebildet ist.

8. Vorrichtung nach Anspruch 7,
**dadurch gekennzeichnet, dass**
die Kinematik von der Rechnereinheit (17) steuerbar ist.

9. Vorrichtung nach Anspruch 7 oder 8,
**dadurch gekennzeichnet, dass**
die Bilderfassungseinheit (13) in einem Abstand angeordnete Bilderfassungssensoren (14) mit im Wesentlichen parallel zueinander ausgerichteten Aufnahmeachsen aufweist, aus deren erfassten Bildinformationen durch Triangulation 3D-Daten ermittelbar sind.

## Claims

1. Method for inspecting one or more hard-to-reach components (9) of a gas turbine (1) using a flexible endoscope (11) comprising at least one image capture unit (13), which is embodied to capture visual image information and associated 3D data and which is located at the free end (12) of the endoscope (11), and an automatically controllable kinematic system, by means of which an approximate pose of the image capture unit (13) is able to be ascertained, comprising the steps of:
a) introducing the endoscope (11) through an inspection opening;
b) capturing visual image information and associated 3D data by the at least one image capture unit (13), with the at least one image capture unit (13) being automatically guided along a guidance line (21) obtained in the 3D model (20);
c) computer-aided comparing of the captured 3D data to a 3D model (20) of the component(s) (9) to be examined, for the purposes of ascertaining the relative pose (A, B, C, D) of the image capture unit (13) in relation to the component or components (9) using the approximate pose as a starting point; and
d) computer-aided texturing of the 3D model (20) with the visual image information captured by the image capture unit (13), in accordance with the ascertained relative pose of the image capture unit (13).

2. Method according to Claim 1,
**characterized in that**
steps b) to d) are repeated following a change in the pose (A, B, C, D) of the image capture unit (13) of the endoscope (11).

3. Method according to Claim 2,
**characterized in that**
the pose (A, B, C, D) associated with the previously captured visual image information is used as a starting point for the comparison of 3D data, which was subsequently captured together with further visual image information, with the 3D model (20) of the component(s) (9) to be examined.

4. Method according to Claim 1,
**characterized in that**
the endoscope (11) comprises at least two image capture units (13), which capture visual image information and 3D data from different viewing angles, with image information and 3D data from different viewing angles, preferably captured simultaneously, being used together for the comparison of the captured 3D data with the 3D model (20) of the component(s) (9) to be examined.

5. Method according to Claim 1,
**characterized in that**
the captured 3D data are compared to the 3D model (20) for determining deviations (21) after the pose (A, B, C, D) of the image capture unit (13) has been ascertained in relation to the component or components (9), with the deviations (21) preferably being stored as change in the texture (20) and/or as an adjustment of the 3D model (20) in accordance with the captured 3D data.

6. Method according to any of the preceding claims, **characterized in that**
the image capture unit (13) employed comprises spaced apart image capture sensors (14) with recording axes that are aligned substantially parallel to one another, 3D data being able to be ascertained from the captured image information thereof by way of triangulation.

7. Apparatus (10) for inspecting one or more hard-to-reach components (9) of a gas turbine (1), comprising a flexible endoscope (11) with at least one image capture unit (13), which is embodied to capture visual image information and associated 3D data, at the free end (12) of the endoscope (11), an automatically controllable kinematic system, by means of which an approximate pose of the image capture unit (13) is able to be ascertained, and a computer unit (17) which is connected to the image capture unit (13) and which has a memory for recording a 3D model (20) of the component(s) (9) to be examined, wherein the computer unit (17) is embodied to carry out the method according to any of Claims 1 to 6.

8. Apparatus according to Claim 7,
**characterized in that**
the kinematic system is controllable by the computer unit (17).

9. Apparatus according to Claim 7 or 8,
**characterized in that**
the image capture unit (13) has spaced apart image capture sensors (14) with recording axes that are aligned substantially parallel to one another, 3D data being able to be ascertained from the captured image information thereof by way of triangulation.

## Revendications

1. Procédé d'inspection d'un ou plusieurs composants (9) difficilement accessibles d'une turbine à gaz (1) à l'aide d'un endoscope flexible (11) comprenant au moins une unité d'acquisition d'images (13) configurée pour acquérir des informations d'image visuelles et les données 3D associées à l'extrémité libre (12) de l'endoscope (11) et d'une cinématique à commande automatique, par le biais de laquelle peut être déterminée une posture approximative de l'unité d'acquisition d'images (13), comprenant les étapes suivantes :
a) introduction de l'endoscope (11) à travers une ouverture d'inspection ;
b) acquisition d'informations d'image visuelles et des données 3D associées par l'au moins une unité d'acquisition d'images (13), l'au moins une unité d'acquisition d'images (13) étant guidée automatiquement le long d'une ligne de guidage (21) contenue dans le modèle 3D (20) ;
c) comparaison assistée par ordinateur des données 3D acquises avec un modèle 3D (20) du ou des composants (9) à examiner afin de déterminer la posture relative (A, B, C, D) de l'unité d'acquisition d'images (13) par rapport au ou aux composants (9) en utilisant la posture approximative comme point de départ ; et
d) texturation assistée par ordinateur du modèle 3D (20) avec les informations d'image visuelles acquises par l'unité d'acquisition d'images (13) en fonction de la posture relative déterminée de l'unité d'acquisition d'images (13).

2. Procédé selon la revendication 1,
**caractérisé en ce que**
les étapes b) à d) sont répétées après une modification de la posture (A, B, C, D) de l'unité d'acquisition d'images (13) de l'endoscope (11).

3. Procédé selon la revendication 2,
**caractérisé en ce que**
la posture (A, B, C, D) associée aux informations visuelles précédemment acquises est ensuite utilisée comme point de départ pour la comparaison avec des informations visuelles supplémentaires acquises sous forme de données 3D avec le modèle 3D (20) du ou des composants (9) à examiner.

4. Procédé selon la revendication 1,
**caractérisé en ce que**
l'endoscope (11) dispose d'au moins deux unités d'acquisition d'images (13) qui acquièrent des informations d'image visuelles et des données 3D sous différents angles de vue, les informations d'images et les données 3D acquises simultanément sous différents angles de vue étant de préférence utilisées conjointement pour la comparaison des données 3D acquises avec le modèle 3D (20) du ou des composants (9) à examiner.

5. Procédé selon la revendication 1,
**caractérisé en ce que**
après la détermination de la posture (A, B, C, D) de l'unité d'acquisition d'images (13) par rapport au ou aux composants (9), les données 3D acquises sont comparées au modèle 3D (20) afin de constater les écarts (21), les écarts (21) étant de préférence enregistrés sous forme de modification de la texture (20) et/ou d'ajustement du modèle 3D (20) en fonction des données 3D acquises.

6. Procédé selon l'une des revendications précédentes, **caractérisé en ce que**
l'unité d'acquisition d'images (13) utilisée possède des capteurs d'acquisition d'images (14) disposés à une distance donnée, avec des axes de capture orientés de manière sensiblement parallèle les uns aux autres, à partir des informations d'images acquises desquels les données 3D peuvent être déterminées par triangulation.

7. Dispositif (10) d'inspection d'un ou de plusieurs composants (9) difficilement accessibles d'une turbine à gaz (1), comprenant un endoscope flexible (11) avec au moins une unité d'acquisition d'images (13) configurée pour acquérir des informations d'image visuelles et les données 3D associées à l'extrémité libre (12) de l'endoscope (11), une cinématique à commande automatique par le biais de laquelle peut être déterminée une posture approximative de l'unité d'acquisition d'images (13) et une unité de calcul (17) reliée à l'unité d'acquisition d'images (13) avec une mémoire pour enregistrer un modèle 3D (20) du ou des composants (9) à examiner, l'unité de calcul (17) étant configurée pour mettre en œuvre le procédé selon l'une des revendications 1 à 6.

8. Dispositif selon la revendication 7,
**caractérisé en ce que**
la cinématique peut être commandée par l'unité de calcul (17).

9. Dispositif selon la revendication 7 ou 8, **caractérisé en ce que**
l'unité d'acquisition d'images (13) possède des capteurs d'acquisition d'images (14) disposés à une distance donnée, avec des axes de capture orientés de manière sensiblement parallèle les uns aux autres, à partir des informations d'images acquises desquels les données 3D peuvent être déterminées par triangulation.
